(19) Europäisches Patentamt / European Patent Office / Office européen des brevets

(11) **EP 4 271 206 B1**

(12) **EUROPEAN PATENT SPECIFICATION**

(45) Date of publication and mention
of the grant of the patent:
**04.03.2026 Bulletin 2026/10**

(21) Application number: **22700107.0**

(22) Date of filing: **04.01.2022**

(51) International Patent Classification (IPC):
*A23L 7/104* (2016.01)    *A23J 1/12* (2006.01)
*A23J 3/14* (2006.01)    *A23J 3/34* (2006.01)
*A23K 10/00* (2016.01)    *A23L 33/185* (2016.01)
*A61K 8/64* (2006.01)    *A61K 36/899* (2006.01)
*A23L 2/66* (2006.01)    *A23L 7/10* (2016.01)

(52) Cooperative Patent Classification (CPC):
**A23L 7/104; A23J 1/125; A23J 3/14; A23J 3/346;
A23L 7/10;** A23K 10/30; A23K 20/147; A23L 2/66;
A23L 33/185

(86) International application number:
**PCT/EP2022/025001**

(87) International publication number:
**WO 2022/144450 (07.07.2022 Gazette 2022/27)**

(54) **OAT PROTEIN COMPOSITION AND METHOD FOR PREPARING OAT PROTEIN COMPOSITION**

HAFERPROTEINZUSAMMENSETZUNGEN UND VERFAHREN ZUR HERSTELLUNG VON
HAFERPROTEINZUSAMMENSETZUNGEN

COMPOSITION PROTÉIQUE DE L'AVOINE ET PROCÉDÉ DE PRÉPARATION DE LA
COMPOSITION PROTÉIQUE DE L'AVOINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.01.2021 EP 21305002
03.12.2021 US 202163285563 P**

(43) Date of publication of application:
**08.11.2023 Bulletin 2023/45**

(73) Proprietor: **ROQUETTE FRERES
62136 Lestrem (FR)**

(72) Inventors:
• **MEYER, Robert, Alexander, Harris
Geneva, IL 60134 (US)**
• **ZHOU, Leon
Geneva, IL 60134 (US)**
• **CHENG, Ron
Geneva, IL 60134 (US)**
• **CAMPBELL, Kerry
Geneva, IL 60134 (US)**

(74) Representative: **Plasseraud IP
104 Rue de Richelieu
CS92104
75080 Paris Cedex 02 (FR)**

(56) References cited:
**EP-A1- 0 619 950    WO-A1-2011/078711**

• **"Handbook of Hydrocolloids, Second Edition", 1
January 2009, article S. GONZALEZ- PEREZ ET
AL: "Chapter 15: Vegetable Protein Isolates",
pages: 1 - 27, XP055687835**
• **CHRISTINA KLOSE ET AL: "Proteins in Oats;
their Synthesis and Changes during
Germination: A Review", CRITICAL REVIEWS IN
FOOD SCIENCE AND NUTRITION, vol. 52, no. 7, 1
July 2012 (2012-07-01), USA, pages 629 - 639,
XP055235833, ISSN: 1040-8398, DOI: 10.1080/
10408398.2010.504902**

## Description

### Technical Field

The invention pertains to the field of oat protein compositions and production method thereof. In particular, the present invention concerns an oat protein composition having low lipid content, which does not contain traces of organic solvent. The present invention also concerns a method of production of an oat protein composition from oat milk co-products.

### Background Art

Oats are a well-known source of a wide variety of useful products. Examples of such products are flour, starch, protein isolate and concentrate, protein-enriched flour, bran, gum and oil. Traditional techniques used in the cereal grain processing industry are frequently difficult to use with oats because of process problems relating to the presence of lipids in the oats. Moreover, unless the oats are de-oiled prior to milling, milling processes would result in the formation of flour and protein fractions containing lipids, which may result in the development of rancidity on storage of the flour and protein.

The most widely used technique consists in a first de-oiling made with help of organic solvents like hexane or ethanol. Man skilled in the art is aware for example of EP0051943 from DUPONT which teaches the use of aliphatic hydrocarbon solvent to remove lipids from oat flours. Main drawbacks of such technologies are industrial use of organic solvent, associated explosion risks and spoilage, and residual levels of lipids in final products.

Such risks seem so important that the main current commercial product called PROATEIN® is currently produced without de-oiling. EP1706001 is only based on the use of amylases and centrifugal separation. As disclosed in the example part, such process leads to a composition where lipids and proteins are not separated, thus leading to a composition having a lipid content much more than 10% by weight based on total weight.

To address these drawbacks, some alternative processes have been recently proposed. Such processes are based on the use of supercritical $CO_2$. The process of EP2120604 from VALTION TEKNILLINEN describes, as one of the different fractions, a protein composition which is deoiled. This process is done to avoid "complicated wet methods which affect the properties of oat" and is done to maintain the properties of the desired valuable components as natural as possible. However, by this process, the small fraction of protein needs to be processed and grinded, thereby leading to a mean particle size of protein below 10 microns. This process leads to a superfine size protein powder which is not desirable in some applications, but also which is difficult to handle in industrial plants, mainly due to dust formation and explosion hazard. Another major industrial problem linked to particles having a size below 10 microns is that the cyclone and filtration systems needed to recover such small particles are expensive and difficult to operate efficiently and/or effectively. Most importantly supercritical CO2 is not used at industrial scale of oat components extraction because of difficulties to handle and huge costs due to quantities of supercritical CO2 that would be needed. Further, this process did not demonstrate its ability to obtain compositions having a high level of protein (e.g. above 70% or above 80%).

The document Brückner-Gühmann et al. (Foaming characteristics of oat protein and modification by partial hydrolysis, European Food Research and Technology, Vol.244, n°12, 28 August 2018, pages 2095-2106) describes the production of an oat protein isolate using an oat protein concentrate as a starting material, using a step of alkaline extraction of this concentrate, a step of separation of the protein into the supernatant and a step of lyophilisation of this supernatant to produce the oat protein isolate powder. This article explores the functionality of foaming of the obtained protein isolate. This document does not disclose the mean particle size of the oat protein composition obtained and the composition is not spray dried.

The PCT application PCT/EP2020/068658 (published as WO 2021/001478) discloses a process for producing an oat protein composition from oat flour. However, the inventors have observed that was a significant loss of protein during this process, even though the weight percentage of oat protein in the final oat protein composition is satisfactory.

Patent application WO 2011/078711 A1 discloses a method of producing a preparation of oat protein from oat bran.

The present invention proposes a process for producing an oat protein composition from the fiber-rich fraction of processed oats, thereby recovering proteins that would usually be discarded.

### Description of the invention

The invention concerns a process for producing an oat protein composition comprising less than 100 ppm of organic solvents and a ratio of insoluble fiber/β-glucan of at least 5; characterized in that the process comprises the following steps:

- preparing a suspension from oat processed material comprising between 10 and 35% of insoluble fibers, preferably an oat pulp fraction;

- separating a soluble fraction comprising protein from an insoluble fraction comprising fibers;
- forming a proteic precipitate;

wherein said process further comprises a step of adding polysorbate to the suspension from oat processed material and/or to the soluble fraction comprising protein.

In a first embodiment, the present invention relates to a process for producing an oat protein composition as defined above, further characterized in that the process comprises the following steps :

a. preparing a suspension from oat processed material;

b. incubating the suspension preferably at a pH between 1.5 and 3.0, more preferably between 2.0 and 2.5 or at a pH comprised between 6.0 and 11.0, more preferably 8.5-10.5;

c. separating a soluble fraction comprising protein from an insoluble fraction comprising fibers;

d. adding a polysorbate to the soluble fraction and optionally adjusting pH from 5.8 to 8.0, preferably 6-7, to form additive-containing soluble fraction;

e. heating the additive-containing soluble fraction at a temperature going from 35 to 100°C, for example 35 to 80°C or 85° to 95°C;

f. forming a proteic precipitate;

g. separating the proteic precipitate from soluble components to obtain a protein curd;

h. Optionally at least one washing step of the protein curd, preferably at a pH between 4.5 and 6 and at a temperature between 50 and 60°C;

i. Optionally a step of adjusting the pH of the protein curd at a range going from 6.5 to 10;

j. Optionally a step of heat treatment of the protein curd;

k. Optionally a step of homogenization treatment

l. Optionally a step of drying, preferably spray drying.

By "oat protein composition", it is meant a composition comprising essentially oat protein as the only source of protein. In other terms, the oat protein composition does not comprise any protein that comes from another origin than oat.

In a preferred embodiment, the oat protein composition does not contain traces of organic solvent.

By "a composition that does not contain traces of organic solvent", it is meant a composition that contains less than 100 ppm of solvent, preferably less than 10 ppm of organic solvent and more preferably a composition that does not contain organic solvent at all.

By "organic solvent", it is meant solvent based on compounds that contain carbon. On the opposite, inorganic solvents which are allowed in this invention do not contain carbon. A typical inorganic solvent allowed in the present invention is water.

"Oat" in the present application must be understood as a cereal plant belonging to the botanical genus Avena. This genus can be divided in wild and cultivated species which have been cultivated for thousands of years as a food source for humans and livestock. The cultivated species contain:

- *Avena sativa* - the most cultivated specie, commonly referred to as "oats".

- *Avena abyssinica* - the Ethiopian oat, native to Ethiopia, Eritrea, and Djibouti; naturalized in Yemen and in Saudi Arabia

- *Avena byzantina,* a minor crop in Greece and Middle East; introduced in Spain, Algeria, India, New Zealand, South America, etc.

- *Avena nuda* - the naked oat or hulless oat, which plays the same role in Europe as does A. abyssinicain Ethiopia. It is sometimes included in A. sativa and was widely grown in Europe before the latter replaced it. As its nutrient content is somewhat better than that of the common oat, A. nuda has increased in significance in recent years, especially in organic farming.

- *Avena strigosa* - the lopsided oat, bristle oat, or black oat, grown for fodder in parts of Western Europe and Brazil.

In a preferred embodiment, oat protein composition is a protein concentrate, or a protein isolate. The oat protein composition can thus have around 50% by weight of protein or above, based on dry matter based on the total dry weight of the oat protein composition, for example from around 55 to 85% or from 55 to 95%.

In the present application, "protein concentrate" must be understood as an oat protein composition which contains from 50% to 70%, by weight of protein on dry matter based on the total dry weight of the oat protein composition.

In the present application, "protein isolate" must be understood as an oat protein composition which contains more than 70%, generally more than 75%, preferably more than 80% by weight of protein on dry matter based on the total dry weight of the oat protein composition. The protein isolate can comprise less than 95%, generally less than 90% of protein on dry matter based on the total dry weight of the oat protein composition.

Various protocols can be used from prior art in order to quantify the protein content. In the present application, a preferred method to quantify the protein content consists of 1) determining the nitrogen content in the composition and 2) multiplying the nitrogen content by 6,25 factor (which represent the average quantity of nitrogen in protein). The nitrogen content can be determined by any suitable method in the art, such as the Kjeldhal method or by using a combustion analyzer. Preferably, the nitrogen content is determined by a combustion analyzer.

In the present application "protein" must be understood as molecules, consisting of one or more long chains of amino-acid residues. In the present application, proteins can be native proteins or modified proteins, including hydrolyzed proteins. These proteins can be present in different concentrations, including protein isolates or protein concentrates. Oats are the only cereal containing avenalin as globulin or legume-like protein, as the major storage protein (80% by weight). Globulins are generally characterized by their solubility in dilute saline as opposed to the more typical cereal proteins, such as gluten and zein which is a prolamine. The minor protein of oat is the prolamine which is called avenin.

The oat protein composition has an extractable lipid content below 10% by weight on dry matter based on the total dry weight of the oat protein composition.

In the present application "extractable lipid" must be understood as molecules that are soluble in nonpolar solvents for example petroleum ether, i.e. extractable lipids. Lipids include fatty acids, waxes, sterols, fat-soluble vitamins (such as vitamins A, D, E, and K), monoglycerides, diglycerides and triglycerides. Oats, after corn, have the highest lipid content of all the cereals, i.e. greater than 6%, sometimes greater than 10% by weight for some oats, in comparison to about 2-3% by weight for wheat and most other cereals.

One advantage of the present invention is even the lipids that are not soluble in non-polar solvents can also be eliminated, leading to an oat protein composition wherein the total lipid content is also low.

The total lipid content used for the invention is acid hydrolysis using AOAC 996.06 method, while extractable lipid is measured by Soxhlet method using petroleum ether using AOAC 963.15 protocol.

The oat protein composition of the invention comprises an extractable lipid content below 10% by weight on dry matter based on the total dry weight of the oat protein composition, advantageously below 9%, more advantageously below 8%, even more advantageously below 7%, preferentially below 6%. The oat protein composition of the invention may comprise an extractable lipid content above 1% by weight on dry matter based on the total dry weight of the oat protein composition, for example more than 2%. The oat protein composition of the invention comprises an total lipid content below 10% by weight on dry matter based on the total dry weight of the oat protein composition, advantageously below 9%, more advantageously below 8%. The oat protein composition of the invention may comprise a total lipid content above 1% by weight on dry matter based on the total dry weight of the oat protein composition, for example more than 2%.

The oat protein composition can comprise from 0 to 25% by weight of starch on dry matter based on the total dry weight of the oat protein composition, preferably from 0 to 10%, more preferably from 1 to 8%. Starch content of the composition can be determined using AOAC Official Method 996.11, Starch (Total) in Cereal Products, and more particularly using the method of the booklet Megazyme, Total starch assay procedure (amyloglucosidase / $\alpha$-amylase method) K-TSTA-50A / K-TSTA-50A 11/20, AOAC 996.11.

The oat protein composition can comprise from 0 to 25% by weight of starch hydrolysate on dry matter based on the total dry weight of the oat protein composition, preferably from 0 to 10%, more preferably from 1 to 8%. Starch content of the composition can be determined using AOAC Official Method 996.11, Starch (Total) in Cereal Products, and more particularly using the method of the booklet Megazyme, Total starch assay procedure (amyloglucosidase / $\alpha$-amylase method) K-TSTA-50A / K-TSTA-50A 11/20, AOAC 996.11.

The oat protein composition can comprise a soluble fiber content going below 10% by weight on dry matter based on the total dry weight of the oat protein composition, preferably from 0.1 to 5%, more preferably from 0.1 to 3%. In the present application, soluble fiber content, insoluble fiber content, fiber content (which includes the total of soluble and insoluble fiber contents) can be determined using AOAC Official Method 2017.16, Total Dietary Fiber in Foods and Food Ingredients. By soluble fibers, it is meant to be fibers soluble in ethanol as described in this method. One of the dietary fibers generally present in the composition is beta-glucans.

The oat protein composition can comprise a beta-glucan (also termed $\beta$-glucan) content below 3% by weight based on the total dry weight of the oat protein composition, generally below 2%, preferably below 1%. The content of $\beta$-glucan can be determined using AOAC Official Method 995.16.

The oat protein composition can comprise an insoluble fiber content between 1 and 10% by weight based on the total dry weight of the oat, advantageously between 2 and 8%.

The oat protein composition displays a ratio of insoluble fiber/$\beta$-glucan of at least 5, preferably at least 5, at least 7, at least 8, at least 9% at least 10, at least 11 or at least 12.

In one aspect, the invention relates to an oat protein composition characterized in that it comprises, by weight, at least 50% protein, less than 10% extractable lipids and a ratio of insoluble fiber/β-glucan of at least 5, preferably at least 5, at least 7, at least 8, at least 9% at least 10, at least 11 or at least 12.

The powder of oat protein composition presents advantageously a mean particle size greater than 20 microns, preferably greater than 30 microns, more preferably greater than 40 microns. The oat protein composition presents advantageously a mean particle size lower than 300 microns, preferably lower than 200 microns, more preferably lower than 150 microns.

In the present application "particle size" must be understood as a notion introduced for comparing dimensions of solid, liquid or gaseous particles. The particle-size distribution (PSD) of a powder, or granular material, or particles dispersed in fluid, is a list of values or a mathematical function that defines the relative amount, typically by mass, of particles present according to size. Several methods can be used for measuring particle size and particle size distribution. Some of them are based on light, or on ultrasound, or electric field, or gravity, or centrifugation. The use of sieves is a common measurement technique. In the present application, the use of laser diffraction method is preferred. As for "mean particle size" (d 50) determined by laser diffraction, this mean particle size is a volume-weighted mean particle size. The man skilled in the art will be able to select a laser diffraction method allowing him to obtain an accurate mean particle size determination. An example of such method is indicated in the examples section.

In the present application, "dry matter" must be understood as the relative percentage by weight of solids based on total weight of the sample. Every well-known method can be used but desiccation method, which consists of estimating quantity of water by heating a known quantity of sample, is preferred.

Based on the total weight of proteins in the composition, the composition can comprise:

- from 0,5 to 30% of proteins having a molecular weight of 300kDa and more, advantageously from 5 to 15%,

- from 30 to 75% of proteins having a molecular weight of between 50 and 300kDa, advantageously from 45 to 65%,

- from 10 to 50% of proteins having a molecular weight of between 10 and 50kDa, advantageously from 25 to 45%,

- from 0,5 to 20% of proteins having a molecular weight of 10kDa and less, , advantageously from 1 to 10%,

the sum making 100%.

The protein molecular weight (MW) distribution can be determined using Size Exclusion Chromatography.

To do so, it is possible to use the following method which is indicated as an example. Samples can be dissolved in 200 mM phosphate buffer, pH=7.6, vortexed for 1 minute initially and 10 minutes later and stored at 4C over-night. The solutions are centrifuged at 7000 g for 10 minutes, the supernatant is measured for soluble protein content the next day, and the samples are diluted to 10 mg/mL with phosphate buffer. The samples are chromatographed using 2 SEC columns (400 and 300 Agilent Advanced Bio SEC Column, 5000 - 1,250,000 MW Range) in sequence using phosphate buffer, pH=7.6 as the mobile phase at 0.5 mL/minute. The detection is a UV = 280 nm. Several protein molecular weight standards going from 14300 to 669000 Da (Lysozyme, Carbonic Anhydrase, BSA, HSA, B-Amylase, Apoferritin, Thyroglobulin) are analyzed to identify the retention time and calibrate the chromatography apparatus. For sample analysis, chromatograms peak or peak apex (group) is determined along with the range of the peak (start and end) and the molecular weight is determined for the range and peak apex. The percent of molecular weight can be determined, for example, for: >300 kDa, 300 kDa to 50 kDa, 50 KDa to 10 KDa and <10 kDa.

In one embodiment, the oat protein composition can be hydrolysed. Hydrolysis can conducted by any means known, for example by using a protease or a peptidase enzyme.

Contrary to the process described in patent application PCT/EP2020/068658, (published as WO 2021/001478) which uses oat seeds or oat flour as a starting material, the process according to the present invention uses oat processed material as a starting material.

The expression "oat processed material" as used herein has its general meaning in the art. It refers to the oat pulp fraction which is a by-product from oat milk or oat syrup production. This by-product is generally discarded. It is the merit of the applicants to have observed that this oat processed material, which is generally considered as a fiber-rich fraction, also contains residual desirable proteins. This makes it a useful starting material that can be used in order to obtain an oat protein composition.

Typically, oat processed material comprises 10-45% protein, 5-30% starch and starch hydrolysate, 10-50% fiber and 3 to 15% extractable lipids. These amounts are weight percentages based on the weight of the total dry solids of the oat processed material. Methods for determining the amounts are described above.

In a preferred embodiment, the oat processed material comprised between 10 and 35% of insoluble fibers. In contrast, oat flour typically comprises around 2 to 5% of insoluble fiber.

Depending on the method used, the starch and starch hydrolysate amounts can be determined together and are indistinguishable. In this case, the total amounts relate to the sum of starch and starch hydrolysates.

Depending on the source of oat processed material, the weight ratio between starch and starch hydrolysates can be above 1:1000, preferably above 1:900, even more preferably above 1:800, above 1:700, above 1:600, above 1:500, above 1:400, above 1:300, above 1:200, above 1:150, above 1:100, above 1:90, above 1:80, above 1:70, above 1:60 above 1:50, above 1:40, above 1:30, above 1:20, above 1:10, above 1:9, above 1:8, above 1:7, above 1:6, above 1;5, above 1:4, above 1:3 or above 1:2, above 1:1, above 2:1, above 3:1, above 4:1, above 5:,1, above 6:1, above 7:1, above 8:1, above 9:1, above 10:1, above 20:1, above 30:1, above 40:1, above 50:1, above 60:1; above 70:1, above 80:1, above 90:1; above 100:1; above 150:1, above 200:1; above 300:1, above 400:1, above 500:1, above 600:1, above 700:1, above 800:1, above 900:1, above 1000:1.

Depending on the source of oat processed material, the weight ratio between starch and starch hydrolysates can be below 1000:1, preferably below 900:1, even more preferably below 800:1, below 700:1, below 600:1, below 500:1, below 400:1, below 300:1, below 200:1, below 500:1 below 400:1, below 300:1, below 200:1, below 150:1, below 100:1, below 90:1, below 80:1, below 70:1, below 60:1, below 50:1, below 40:1, below 30:1, below 20:1, below 10:1, below 9:1, below 8:1, below 7;1, below 6:1, below 5:1, below 4:1, below 3:1, below 2;1, below 1:1, below 1:2, below 1:3, below 1:4, below 1:5, below 1:6, below 1:7, below 1:8, below 1:9, below 1:10, below 1:20, below 1:30, below 1:40, below 1:50, below 1:60, below 1:70, below 1:80, below 1:90, below 1:100, below 1:150, below 1:200, below 1:300, below 1:400, below 1:500, below 1:600, below 1:700, below 1:800, below 1:900, below 1:1000.The weight ratio between starch and starch hydrolysates can be comprised within any range resulting from the combinations of the lower thresholds and upper thresholds described above. Typically, the weight ratio between starch and starch hydrolysates can be comprised between 1:1000 and 1000:1, or between 1:1000 and 100:1, between 100:1 and 1000:1, between 10:1 and 1000:1, between 100:1 and 10:1 etc.

In one embodiment of the invention, the oat processed material contains less than 30%, preferably less than 25%, even more preferably less than 20%, less than 10% by weight starch hydrolysate, preferably less than 9%, even more preferably less than 8%, 7%, 6%, 5%, 4%, 3%, 2%, 1%.

The oat processed material can be obtained in the form of oat pulp, also known as oat okara, which is the pulp that is generally discarded during the preparation of oat milk or oat syrup. Briefly, the procedure starts by measuring and milling the oat grains to break apart their outer hull. Then the grains are stirred in warm water and ground into a slurry. The slurry is treated, eventually with enzymes, and heat to create a thick liquid oat base, which is then separated by decanting, filtering, or centrifugation. The supernatant represents the oat milk or syrup, whereas the pellet is the oat pulp or okara.

Several oat okaras are commercially available. For instance, High Protein Oat Milk Flour is available from Renewal Mill. Another example of commercially available oat okara is OatGold, commercialized by SunOpta.

The oat processed material can also be obtained as the by-product of a process for obtaining an oat protein composition. In this case, the oat processed material can be the heavy layer resulting from the fiber separation step of such a process (such as step described in the patent application PCT/ PCT/EP2020/068658).

The suspension is a suspension of oat processed material in water. As water, any food compatible water can be used, but tap water, reverse osmosis water and deionized water are preferred. The aim of step a) is to reach a dry matter comprised between 5% and 20%, preferably between 10% and 15%, most preferably between 10% and 13% by weight with respect to the total weight of the suspension.

In one embodiment of the invention, the suspension from oat processed material of step a) can also comprise oat flour, such as whole oat flour or low-fiber oat flour. The weight ratio between oat processed material and oat flour can vary between 1000:1 and 1:1000, preferably between 100:1 and 1:100, even more preferably between 10:1 and 1:10, most preferably between 5:1 and 1:5.

Typically, whole oat flour comprises 8-30% protein, 40-80% starch and 5-15% fiber and 3 to 15% extractable lipids. Typically, low-fiber oat flour (or de-hulled oat flour) comprises 10-30% protein, 45-80% starch, 0 to 4% of fiber and 3-15% extractable lipids.

The suspension has, at least during a part of the step b), a pH going from 1.5 to 3.0 or from the range 7.0 to 11.0, preferably 2.0-2.5 or 8.5-10.5, even more preferably 8.5-10.5. At alkaline pH, the protein recovery is even higher than in the case of acid extraction. The solvent is preferably water. However, it can be added compounds to make higher the solubility of the protein fraction in the suspension from oat-processed material. Any inorganic or organic acid and base reactant can be used. They may be chosen from caustic soda, potash, lime, citric acid, ascorbic acid, nitric acid, sulfuric acid and hydrochloric acid. The pH of the suspension can be set with these acid and base components to a pH going from 1.5 to 3.0 or from the range 7.0 to 11.0, preferably 2.0-2.5 or 8.5-10.5. The temperature during that steps a and b can be adjusted between 2 and 80°C, for example between 10°C and 30°C.

The temperature during the step b can also be adjusted between 10 and 180°C. In an embodiment, the temperature during step b is adjusted so that the suspension has a temperature comprised between 10°C and 80°, preferably between 30° and 70°C, for at least part of step b. In another embodiment, the temperature can be brought to a temperature from 80 to 180°C, for example from 100 to 155°C for at least part of step b. The step b) can have a duration, depending on the temperature, from 1 s to 90 minutes. For example, when the temperature is from 100 to 155°C, the duration may be from 5 to 90 s. For example, when the temperature is between 80 and 100°C, the duration may be from 30 seconds to 20 minutes. For example, when the temperature is between 30 and 80°C, the duration may be from 5 minutes to 90 minutes. Step b) is referred to as a step of "incubating" the suspension. This term means that the suspension is maintained for a certain period of time, at a certain pH value and a certain temperature. Further components (e.g. enzymes, such as amylase) may be added but are not necessarily added during the "incubation" step b).

The step of separation c) can be done using classic separation methods, including decantation, filtration or centrifugation techniques. The device to conduct the separation step c) can be a decanter, a disc centrifuge (e.g. Alfa Laval Merco centrifuge), a tubular centrifuge, a basket centrifuge or a rotary vacuum filter. Preferably, a decanter is used for this separation step. At the end of this step is obtained a soluble fraction comprising protein separated from an insoluble fraction comprising fibers.

According to one embodiment of the invention, the process further comprises a step of adding an amylase enzyme to the protein-rich suspension of step a., to the incubated suspension of step b. or to the soluble fraction comprising proteins of step c. and reacting at a temperature at which the amylase catalyzes the hydrolysis of starch, for example comprised between 60 and 80°C, preferably between 65 and 75°C, even more preferably around 70°, thereby hydrolyzing the starch of the protein-rich suspension or of the soluble fraction comprising proteins.

Amylases are type of enzymes that catalyzes hydrolysis of starch molecules in smaller sugar molecules. Every type of amylase can be used like beta-amylases or amyloglucosidase, but alpha-amylases are preferred. In a preferred embodiment, thermoresistant alpha-amylases are preferred.

The aim of this optional step is to efficiently reduce the size of starch contained in the protein rich suspension or in the soluble fraction comprising proteins, by hydrolysis, thereby obtaining a soluble dextrin or glucose syrup instead of starch. This soluble transformation of starch will allow a more simple separation with insoluble compounds in the coming steps.

In a preferred embodiment, alpha-amylase enzyme is preferred. Activity of alpha-amylase is expressed as KNU units. In practice, the $\alpha$-amylase activity is measured using ethylidene-G7- PNP (4,6-ethylidene(G7)-p-nitrophenyl(G1)-$\alpha$,D-maltoheptaoside) as a substrate. The compound is hydrolyzed by the LE399 alpha-amylase to G2-PNP and G3-PNP where G means glucose and PNP means p-nitrophenol. G2-PNP and G3-PNP are subsequently hydrolyzed by $\alpha$-glucosidase, which is added to the reaction mixture, to glucose and p-phenol. Absorbance is measured spectrophotometrically at 409 nm under standard reaction conditions. One KNU(T) corresponds to the amount of $\alpha$alpha-amylase that hydrolyzes 672 micromoles of ethylidene-G7PNP per minute under standard conditions (pH 7.1; 37°C. The quantification limit of the method is approximately 0.3 KNU(T)/g. The added amylase may have an activity level comprised between 10 and 170 KNU/100g of dry matter of suspension from oat processed material, preferably between 50 and 160 KNU/100g of dry matter of suspension from oat processed material, even more preferably between 100 and 150 KNU/100g of dry matter of suspension from oat processed material. One Kilo Novo alpha-amylase Unit (KNU) is a value known by the man skilled in the art and is the amount of enzyme which breaks down a determined quantity of starch per hour at Novozymes' standard method. This test consists in determining alpha-amylase activity relative to an alpha-amylase standard with known activity (Termamyl) and is expressed in Kilo Novo alpha-amylase Units (KNU). One KNU is the amount of alpha-amylase which, under standard conditions (pH 7.1; 37°C), dextrinizes 5.26 g starch dry substance per hour

In a preferred embodiment, this hydrolysis step is carried out on the soluble fraction of step c., i.e. after extraction of the proteins at an acidic or alkaline pH.

In a preferred embodiment of the invention, the process comprises the steps of:

- preparing a suspension from oat processed material;
- incubating the suspension at a pH comprised between 6.0 and 11.0, preferably 8.5-10.5, even more preferably 8.5-10.5 and at a temperature comprised at least during a part of step b) between 10°C and 80 or from 80 to 180°C;
- separating a soluble fraction comprising protein from an insoluble fraction comprising fibers;
- adding an amylase enzyme to the protein-rich suspension of step a., to the incubated suspension of step b or to the soluble fraction comprising proteins of step c. and incubating at a temperature at which the amylase catalyzes the hydrolysis of starch, for example comprised between 60 and 80°C, preferably between 65 and 75°C, even more preferably around 70°C.

In one embodiment, the soluble fraction comprising protein obtained after step c), and optionally after treatment with an amylase, can be pooled together with other soluble fractions comprising protein, which have been obtained either by the same process or by other processes. In a preferred embodiment, the soluble fraction comprising protein obtained after step c) can be pooled with a soluble fraction comprising obtained from oat grains or oat flour. For instance, the soluble fraction comprising protein obtained after step c) can be pooled with the light layer comprising proteins obtained after step 5) of the process described in application PCT/EP2020/068658.

In this embodiment, the invention relates to a process for producing an oat protein composition which has preferably an extractable lipid content below 10% by weight on dry matter based on the total dry weight of the oat protein composition characterized in that the process comprises the following steps :

1) Preparing a protein-rich suspension from oat flour by mixing the oat flour with water;

2) adding an amylase enzyme to the protein-rich suspension;

3) incubating the protein rich-suspension at a pH between 1.5 and 3.0, preferably between 2.0 and 2.5 or at a pH comprised between 6.0 and 11.0, preferably 8.5-10.5, even more preferably 8.5-10.5,.

4) Separating by centrifugation the hydrolyzed protein-rich suspension until obtaining an oat processed material comprising fibers and a light layer comprising proteins;

5) Preparing a soluble fraction comprising proteins from the oat processed material of step 4) by:

5a) preparing a suspension from oat processed material;

5b) a step of incubating the suspension at a pH between 1.5 and 3.0, preferably between 2.0 and 2.5 or at a pH comprised between 6.0 and 11.0, preferably 8.5-10.5, even more preferably 8.5-10.5;

5c) separating a soluble fraction comprising protein from an insoluble fraction comprising fibers;

6) Mixing the light layer comprising proteins of step 4) with the soluble fraction comprising proteins of step 5);

7) A step of adding a polysorbate to the soluble fraction of step 6) and optionally adjusting pH from 5.8 to 8.0, preferably 6-7 to form additive-containing soluble fraction;

8) A step of heating the additive-containing soluble fraction at a temperature going from 35 to 100°C, for example 35° to 80°C or 85° to 95°C;

9) A step of forming a proteic precipitate;

10) A step of separation of the proteic precipitate from soluble components to obtain a protein curd.

During the step d) or 7) of the process described just above, a polysorbate is added to the soluble fraction comprising protein to form an additive-containing soluble fraction. Polysorbate may be added in an amount comprised between 0.1% and 5%, preferably between 2% and 4%, and more preferably 3% by weight with respect to the total weight of dry solids of the suspension from oat processed material.

Alternatively, the polysorbate can be added directly to the suspension of oat processed material instead of being added to the soluble fraction comprising protein after a first separation step. Indeed, the Applicant has demonstrated that the polysorbate can be added either to the suspension or to the soluble fraction, with similar results (-see Examples 3 and 4). This second embodiment of the invention is detailed below.

Polysorbates are a class of emulsifiers used in cosmetic, pharmaceuticals and food preparations. Polysorbates are oily liquids derived from ethoxylated sorbitan (a derivative of sorbitol) esterified with fatty acids. Common brand names for polysorbates include Scattics, Alkest, Canarcel, and Tween. Common used polysorbate are Polysorbate 20 (polyoxyethylene (20) sorbitan monolaurate), Polysorbate 40 (polyoxyethylene (20) sorbitan monopalmitate), Polysorbate 60 (polyoxyethylene (20) sorbitan monostearate) and Polysorbate 80 (polyoxyethylene (20) sorbitan monooleate) (number following 'polyoxyethylene' refers to total number of oxyethylene -($CH_2CH_2O$)- groups found in the molecule and number following 'polysorbate' is related to the type of fatty acid associated with the polyoxyethylene sorbitan part of the molecule). Preferably, the polysorbate is Polysorbate 80 (polyoxyethylene (20) sorbitan monooleate) also known as Tween 80.

Optionally, the pH is adjusted from 5.8 to 8.0, preferably 6.0 to 7.0. Any acid or base already cited above can be used to do so.

The process comprises a step e) or 8) of the process described just above of heating the additive-containing soluble fraction at a temperature going from 35 to 100,°C, for example from 35 to 80°C or 85 to 95°C, preferably from 60 to 70°C. At these preferred ranges, the separation of oil and protein is made easier. This step of heating can be done under continuous or uncontinuous mixing of the additive-containing soluble fraction. The step of heating the protein suspension may be done during from 30 to 150 minutes, advantageously from 30 to 120 minutes and preferably from 60 to 90 minutes.

Preferably the temperature is between 70° and 90°C. Advantageously, at these high temperatures, the oil content in the final product obtained by the process is low.

# EP 4 271 206 B1

Optionally a homogenization step can be carried out after adding the polysorbate. Typically, the homogenization step can be carried out using a 2-stage homogenizer with 200 bar first stage pressure and 40 bar second stage pressure. The Applicants have observed that this leads to increased yield in the protein content recovered at the end of the process.

The process also comprises a step f) or 9) of the process described just above of forming a proteic precipitate. This step may be done by adjusting the pH of the heated additive-containing soluble fraction close to isoelectric point, for example in the range going from 4.5 to 5.8 to form a proteic precipitate, preferably from 5.0 to 5.5. This step can be done at a temperature going from 20 to 80°C, preferably at a temperature going from 50 to 60°C.

After forming the proteic precipitate, the process comprises a step of separation g) or 10) of the process described just above of the proteic precipitate from soluble components, preferably using centrifuge, plate frame filtration separation or membrane, to obtain a protein curd.

The process can optionally comprise at least one washing step of the protein curd, by example by resuspending the protein curd in acidic water and by separating again and obtain a washed protein curd. To conduct this washing step, same conditions than the steps f and g described above can be used.

The process can also comprise a homogenization step of the protein. Homogenization techniques in the field of proteins are known in the art. In particular, the homogenization may be carried out at high pressure. For example, it can be at a pressure of between 2 MPa and 800 MPa, for example between 2 MPa and 250 MPa.

The process can also comprise an ultrasonication step of the protein curd.

The process can also comprise at least one step of adjusting the pH of the protein curd. The protein curd can have its pH adjusted at a range going from 7.0 to 11.0, by example from 9.0 to 10.0.

The process can also comprise a step of heat treatment of the protein curd. The temperature can be from 75 to 180°C. Depending on the temperature, the time of the treatment can be from 0.1 s to 20 minutes, advantageously from 0.1 to 30 s, most preferably between 10 and 20 s.

The process can comprise also a drying step in order to manufacture the oat protein powder of the invention. The drying step can be done by using drum drying or spray drying, including multi-stage spray drying, preferably spray drying. One advantage of the invention is that the composition allows obtaining an excellent productivity when spray drying and/or limitation of product lost in the spray drier during the process. Without being bound to any theory, it may be explained by the particular composition that has lower viscosity than compositions generally spray dried, because of low content of soluble fiber compared to starch content.

The process according to the invention may also comprise a step of modifying the proteins in the oat protein composition by subjecting the composition to enzymatic treatment with a protease or a glutaminase. This step may be carried out preferably at any stage after recovery of the protein curd.

In a second embodiment, the invention concerns a process for obtaining an oat protein composition, characterized in that the process comprises the following steps:

a. Preparing a suspension from oat processed material;

b. A step of adding a polysorbate to the soluble fraction and optionally adjusting pH from 5.8 to 8.0, preferably 6-7 to form additive-containing suspension;

c. Optionally, a step of homogenizing said additive-containing suspension;

d. separating a soluble fraction comprising protein from an insoluble fraction comprising fibers;

e. optionally, a step of forming a suspension from the insoluble fraction comprising fibers and separating again the soluble fraction comprising protein from an insoluble fraction comprising fibers and mixing the soluble fraction comprising protein with the soluble fraction obtained in step d)

f. A step of forming a proteic precipitate;

g. A step of separation of the proteic precipitate from soluble components to obtain a protein curd;

h. Optionally at least one washing step of the protein curd, preferably at a pH between 4.5 and 6 and at a temperature between 50 and 60°C;

i. Optionally a step of adjusting the pH of the protein curd at a range going from 6.5 to 10;

j. Optionally a step of heat treatment of the protein curd;

k. Optionally a step of homogenization treatment;

l. Optionally a step of drying including spray drying.

All the specific details described for the first embodiment (temperatures, pH values, separation techniques, homogenizing techniques and other optional steps) apply to this second embodiment, mutatis mutandis.

In another aspect, the present invention also relates to an oat protein composition obtainable according to the process described above.

Typically, the oat protein composition obtainable according to the above process has an extractable lipid content below 10% by weight on dry matter based on the total dry weight of the oat protein composition, preferably below 9%, even more preferably below 8%, below 7% or below 6%.Another aspect of the present invention is the use of the oat protein composition of the present invention or obtained by the process of the present invention, preferably in food, feed, pharmaceutical and cosmetic fields.

Such oat protein composition is particularly suitable for ready to drink beverages or baking or any other food application such as protein bars, non-dairy beverages, powder mixes, yogurts, cheeses, or meat-like products. Its low lipid content allows an improved organoleptic experience when formulated, Indeed, when a product comprises high amounts of lipids, these undesirable lipids can get oxidized and develop a rancid taste, which negatively affects the organoleptic quality of the product.

In general terms, the oat protein composition of the invention can be used in food and beverage products that may include the oat protein composition in an amount of up to 100% by weight relative to the total dry weight of the food or beverage product, for example in an amount of from around 1 % by weight to around 80% by weight relative to the total dry weight of the food or beverage product. All intermediate amounts (i.e. 2%, 3%, 4%... 77%, 78%, 79% by weight relative to the total weight of the food or beverage product) are contemplated, as are all intermediate ranges based on these amounts.

Beverages include acid beverages, carbonated beverages (including, but not limited to, soft carbonated beverages); non-carbonated beverages (including, but not limited to, soft non-carbonated beverages such as flavored waters, fruit juice and sweet tea or coffee based beverages); beverage concentrates (including, but not limited to, liquid concentrates and syrups as well as non-liquid 'concentrates', such as freeze-dried and/or powder preparations). The protein content in the beverage can be very different and the beverage can be a high protein drink. The content is for example between 1 and 12% of the total mass of the beverage, for example between 2 and 10%. Beverages also include milk-like beverages, that can be « barista » type or « coffee creamer » type.

Food products which may be contemplated in the context of the present invention include baked goods; sweet bakery products (including, but not limited to, rolls, cakes, pies, pastries, and cookies); pre-made sweet bakery mixes for preparing sweet bakery products; pie fillings and other sweet fillings (including, but not limited to, fruit pie fillings and nut pie fillings such as pecan pie filling, as well as fillings for cookies, cakes, pastries, waffles, pancakes, muffins and biscuits, confectionary products and the like, such as fat-based cream fillings); desserts such as flan, custard, gelatins and puddings; frozen desserts (including, but not limited to, frozen dairy desserts such as ice cream - including regular ice cream, soft serve ice cream and all other types of ice cream - and frozen non-dairy desserts such as non- dairy ice cream, sorbet and the like); snack bars (including, but not limited to, cereal, nut, seed and/or fruit bars); bread products (including, but not limited to, leavened and unleavened breads, yeasted and unyeasted breads such as soda breads, breads comprising any type of wheat flour, breads comprising any type of non-wheat flour (such as oat, potato, rice and rye flours), gluten-free breads); pre-made bread mixes for preparing bread products; sauces, syrups and dressings; sweet spreads (including, but not limited to, jellies, jams, butters, nut spreads, dulce de leche and other spreadable preserves, conserves and the like); confectionary products (including, but not limited to, jelly candies, soft candies, hard candies, chocolates, caramels and gums); sweetened and un sweetened breakfast cereals (including, but not limited to extruded breakfast cereals, flaked breakfast cereals and puffed breakfast cereals); and cereal coating compositions for use in preparing sweetened breakfast cereals. Other types of food and beverage product may also be contemplated in the context of the present invention. In particular, animal foods (such as pet foods) are explicitly contemplated.

Oat protein can be used in combination with flavours or masking agents.

Oat protein can also be used, eventually after texturization, in meat-like products such as emulsified sausages or plant-based burgers, fish-like products or seafood-like products. It can also be used for making egg substitutes or for the manufacturing of protein containing products such as tofu or tempeh. « Texturized proteins » generally means proteins texturized by extrusion, i.e. especially by dry extrusion to make Textured Vegetable Protein, wet extrusion or high moisture extrusion. Extruders can be single screw extruders, twin screw extruders, multiple screw extruders. Example of multiple screw extruders are planetary extruder or ring-extruder. Other technologies such as shear cell technology, microextrusion or 3D printing can also be used.

The food or beverage product can be used in specialized nutrition, for specific populations, for example for baby or infants, teenagers, adults, elderly people, athletes, people suffering from a disease. It can be meal substitutes formulations, complete nutrition beverages, for example for weight management or in clinical nutrition (for example tube feeding or enteral nutrition).

The oat protein composition can be used as the sole source of protein but also can be used in combination with other plant or animal proteins. These other proteins can be hydrolyzed or not. Generally, these are in the form of isolates or concentrates. The term "plant protein" denotes all the proteins derived from cereals, oleaginous plants, leguminous plants and tuberous plants, and also all the proteins derived from algae and microalgae or fungi, used alone or as a mixture, chosen from the same family or from different families. In the present application, the term "cereals" is intended to mean cultivated plants of the grass family producing edible grains, for instance wheat, rye, barley, maize, sorghum or rice. The cereals are often milled in the form of flour, but are also provided in the form of grains and sometimes in whole-plant form (fodders). In the present application, the term "tubers" is intended to mean all the storage organs, which are generally underground, which ensure the survival of the plants during the winter season and often their multiplication via the vegetative process. These organs are bulbous owing to the accumulation of storage substances. The organs transformed into tubers can be the root e.g. carrot, parsnip, cassava, konjac), the rhizome (e.g. potato, Jerusalem artichoke, Japanese artichoke, sweet potato), the base of the stalk (more specifically the hypocotyl, e.g. kohlrabi, celeriac), the root and hypocotyl combination (e.g. beetroot, radish). For the purposes of the present invention, the term "leguminous plants" is intended to mean any plants belonging to the family Cesalpiniaceae, the family Mimosaceae or the family Papilionaceae, and in particular any plants belonging to the family Papilionaceae, for instance pea, bean, soy, broad bean, horse bean, lentil, alfalfa, clover or lupin. This definition includes in particular all the plants described in any of the tables contained in the article by R. Hoover et al., 1991 (Hoover R. (1991) "Composition, structure, functionality and chemical modification of legume starches: a review" Can. J. Physiol. Pharmacol., 69, pp. 79-92). Oleaginous plants are generally seed-producing plants from which oil is extracted. Oilseed plants can be selected from sunflower, rapeseed, peanut, sesame, pumpkin or flax. The animal protein can be for example egg or milk proteins, such as whey proteins, casein proteins or caseinate. The oat protein composition can thus be used in combination with one or more of these proteins or amino acids in order to improve the nutritional properties of the final product, for example to improve the PDCAAS of the protein or to bring other or modify functionalities.

The oat protein can also be used for the manufacturing of pharmaceutical products or in fermentation, for example for the production of fungi metabolites or cell culture metabolites.

The oat protein composition of the invention can also be used for acidic food products such as yogurts (including, but not limited to, full fat, reduced fat and fat-free dairy yogurts, as well non-dairy and lactose-free yogurts and frozen equivalents of all of these), cheeses or acidic sauces. Acidic food products can have a pH of 3 to 6 when diluted at a dry matter of 10%. The oat protein composition can be used to form of a milk and fermented and/or acidified to provide yogurts and cheeses. These milks can present a dry matter going from 5 to 30%. These milks can comprise other components such as sugars and fats and optional, Yogurts can include stirred yogurts, set yogurts or yogurts to drink. These can be flavoured or not and can include other components such as fruit preparations and/or sweeteners. Cheeses can be process cheese, swiss cheese, string cheese, ricotta, provolone, parmesan, muenster, mozzarella, jack, manchego, blue, fontina, feta, edam, double Gloucester, cheddar, asiago and Havarti. Acidic sauces are for example mayonnaise or ketchup.

The invention will be better understood with the following non-exhaustive examples.

Examples

Example 1: process according to the invention, using the fiber-rich oat processed material obtained during the process according to PCT/EP2020/068658

Experimental procedure

The following procedure was followed: Weigh 12.5 kg starting material (oat flour from Richardson Milling). Fill Lemitec feed tank with ~23 gal/87 L water, 40-50 C. Mix flour into water. Adjust pH to 5.4 to 5.5 with 1 N HCl while agitating for at least 10 min. Add 125 g Liquozyme supra (from Novozyme). Heat to 70 C, 2 hours, recirculate with centrifugal pump. Adjust pH to 7.0 with 1 N NaOH. Centrifuge 5000 rpm, 10 rpm diff, 1500 ml/min feed to Lemitec, with 60/10 weir, collect OF and UF in buckets. Dilute UF fraction from step 8 with hot (50 C) water, six parts water per one part UF. Heat to 65 C, adjust pH to 9.5, mix 20 min or until pH is stable. Centrifuge 7000 rpm, 10 rpm diff, 1000 ml/min feed to Lemitec, with 60/10 weir, collect OF in bucket. Place OF from Steps 8 and 11 back into 50 gal (189 litre ) tank, adjust OF to 65 C, pH 6.5, add 62.5 g of polysorbate (Tween 80), hold 60 min, recirculate with centrifugal pump at 30 Hz. Fill tank to capacity with water, heat back to 60 C. Reduce pH to 5.0 with HCl, measure % volume solids. Centrifuge on Clara 20, 0.45 m^3/h, 9,000 rpm, calculate disch frequency based on % vol solids. Place UF from step 15 in 50 gal (189 litre ) tank, fill tank to full with water, heat to 60 C, reduce pH to 5.0, measure %VS. Centrifuge on Clara 20, 0.45 m^3/h, 9,000 rpm, calculate disch frequency based on % vol solids.

Results

The final product met the target composition at 81.7 % protein and 7.5 % extractable oil.

First separation yield was at 94 % for total solids and 80 % for protein. The second fiber extraction step resulted in an additional 7 to 10 % of the total protein being separated from the fiber fraction. Assuming precipitation yields would be unchanged without this extra protein, the second extraction step increased overall protein yield by 5 to 7 %, resulting in final protein yields of 70 % overall. For total solids, the second extraction step increased overall yield from 9.1 % to 9.4 %. For the 22.5 kg scale batch size currently in use, this could increase actual yield of oat protein powder by 40 to 60g.

In conclusion, the second fiber separation step, according to the present invention, resulted in an increase in protein yields 5 to 7 % protein compared to single fiber separation step.

Overall protein and total solids yields of 70 % and 9.4 %, respectively, are possible with this process.

Example 2: process according to the invention using commercial oat okaras

The following procedure was performed:
Commercial oat okara flour (42% protein, 13% lipids) was used as starting material. 405g water was heated to 70°C and 45g oat okara flour were mixed into the water. The pH of the slurry was adjusted to 10 by adding 5.1g 3N NaOH. After mixing for 30 minutes at 70°C, the slurry was centrifuged at 3,000xg for 3 minutes in a bucket centrifuge. The soluble fraction was collected in a beaker and the insoluble fraction discarded. The pH of the soluble fraction was adjusted to 6.5 using 3N HCL solution. An aqueous solution at a mass concentration of 30% of polysorbate (Tween 80) was prepared and 10g of this solution was added to the soluble fraction. The polysorbate-containing soluble fraction was heated to 90°C and mixed for 1 hour. 100g of water was added to the solution and a proteic precipitate was formed when the pH was adjusted to 5.0. The resulting suspension was centrifuged at 3,000xg for 3 minutes, and the precipitate was oven-dried. Protein content (Nx6.25) was 88% and lipid content was 4%.

When conducting a similar process, but not using polysorbate, the oat protein composition obtained comprises a lipid content higher than 10%.

Example 3: process according to the invention using addition of polysorbate into the suspension of oat processed material and two consecutive extractions of protein supernatant from oat okara

5.7kg oat okara was mixed with 32.2kg (8.5 gallons) water at about 45°C to form a suspension of oat processed material. An aqueous solution at a mass concentration of 30% of polysorbate (Tween 80) was prepared and 1.25kg of the solution was added to the suspension of oat processed material. The pH of the slurry was adjusted to 10.0 using 3N NaOH. The slurry was passed through the UHT system at 300°F (149°C) with a hold time of 15 seconds, and flashed to 160°F. (71°C) The slurry was fed to the Lemitec decanter at 5,500rpm bowl speed, 50rpm differential speed, at 0.36 L/min to match UHT rate. A first supernatant fraction was collected in 5 gallon (19 liter) buckets, and the precipitate was diluted with water up to 40kg, then fed again to the Lemitec at 7,500rpm bowl speed, 100 rpm differential speed, at 1.0 L/min. A second fraction of supernatant was obtained and combined with the first fraction of supernatant in a jacketed tank, and diluted up to 50 gallons. (189 litre). The pH was adjusted to 5.0 using 3N HCl. The suspension was then fed to the Clara20 at 5 L/min, adjusting the discharge time to target 10% solids in the discharge. The protein curd was stored in the refrigerator overnight. The pH of the curd was adjusted to 9.5, and broken up using the Supraton shear pump at 6,000 rpm. The curd was passed through the UHT at 300°F (149°C) with a hold time of 30 seconds, and flashed to 160°F (71°C). The pH was adjusted back to 7.0, and homogenized at 400 bar first stage pressure, and 40 bar second stage pressure. The neutralized curd was spray dried with 220°C inlet temperature, 90°C outlet temperature to obtain an oat protein isolate.

The oat protein isolate obtained comprises 85% of protein N6.25, 6% of oil, 4.6% insoluble fiber, 1.5% soluble fiber, 0.8% dextrin/starch and 3.6% ash.

Protein recovery yield is about 69%.

Example 4: process according to the invention using commercial oat okaras with increased yield

180g commercial oat okara flour was mixed with 1620g warm water to form a suspension of oat processed material. An aqueous solution at a mass concentration of 30% of polysorbate (Tween 80) was prepared and 40g of this solution was added to the suspension. The suspension was homogenized using a 2-stage homogenizer. The slurry was homogenized with 200 bar first stage pressure, and 40 bar second stage pressure. The pH of the slurry was adjusted to around 11 using 20.4g of 3N NaOH. The slurry was passed through the UHT system at 300°F (149°C) with a hold time of 30 seconds, and flashed to 160°F (71°C). 900g of the slurry was then transferred to a centrifuge tube and centrifuged at 3,000xg for 5 minutes. A first fraction of the supernatant was transferred to a beaker, and the precipitate was re-suspended in 700g water and centrifuged again at 3,000xg for 5 minutes. A second fraction of supernatant was recovered and was combined with the first fraction in the same beaker, and the pH was adjusted to 6.5. The solution was covered and heated to 90°C on a stirring hot plate. After mixing for 1 hour at 90°C, the solution was diluted with 200g of water. The pH was adjusted to 5.0 to precipitate the protein, and the suspension was then centrifuged at 3,000xg for 5 minutes. The precipitate was collected and oven-dried for analysis. The oat protein isolate does comprise 93% protein N6.25 and the oil content is 5.6%. The protein recovery yield is about 79%.Example 5: determination of the ratio between insoluble fiber and β-glucan

The amounts of insoluble fiber and of β-glucan were determined for an oat protein composition obtained according to PCT/EP2020/068658 - WO2021/001478 (comparative example) and for an oat composition obtained according to Examples 3 and 4.

The amount of insoluble fiber was determined using AOAC Official Method 2017.16, Total Dietary Fiber in Foods and Food Ingredients.

The amount of β-glucan was determined using AOAC Official Method 995.16.

The ratio between insoluble fiber and β-glucan was calculated as follows:

- Comparative example: 1.3

- Example 3: 38.8

- Example 4: 27.7

In conclusion, the process according to the present invention allows to obtain an oat protein composition that displays satisfactory amounts of protein and lipid, and characterized in a high ratio of insoluble fiber to β-glucans.

Example 6: Preparation of texturized vegetable protein (TVP) comprising an oat protein composition of the invention

The following ingredients were used:

- Oat protein Isolate: composition similar to the one of Example 3
- Pea protein: Nutralys® F85M (Roquette)
- Internal pea fiber: Pea Fiber I50M (Roquette).

The proteins and pea fiber were mixed using a planetary mixer, Hobart A200, mixed for 10 minutes with a paddle mixer at speed 1

| Ingredients | Quantities (%) |
|---|---|
| Nutralys F85M | 66.38 |
| Oat protein Isolate | 14.72 |
| Pea Fiber I50M | 18.90 |

The formulas were calculated to have a pea to oat protein ratio of 82.5 to 17.5 and a total protein content of 65.7%.

The mixes were extruded using a Coperion ZSK25 corotating twin screw extruder with an L/D = 40 and a single circular 2.8 mm diameter die.

Water was adjusted during the extrusion process to reach same approximate target density.

The processing parameters are reported below.

| Trial number | Trial 1 | Trial 2 |
|---|---|---|
| Barrel temperature | | |
| 2 | 30 | 30 |
| 3 | 30 | 30 |
| 4 | 30 | 30 |
| 5 | 30 | 30 |
| 6 | 110 | 110 |
| 7 | 135 | 135 |

(continued)

| Trial number | | Trial 1 | Trial 2 |
|---|---|---|---|
| Barrel temperature | | | |
| | 8 | 135 | 135 |
| | 9 | 96 | 96 |
| | | | |
| Product T°C | | 150 | 144 |
| Pressure psi | | 600-640 | 600 |
| Torque % | | 30 | 29 |
| Power Kw | | 5 | 4 |
| screw speed RPM | | 900 | 900 |
| Cutter speed RPM | | 900 | 900 |
| Dry feed g/min | | 266.6 | 266 |
| water g/min | | 33 | 36 |
| Hydration | | 12.4% | 13.5% |
| % water | | 18.1% | 19.0% |
| SME KJ/Kg | | 991.1 | 950.66 |
| Specific rate g/min / mm2 | | 48.6 | 49.04 |

Results

Density was measured using a 1 L graduated cylinder, the cylinder was tared filled to the top with the texturized protein and weighed.

The water absorption was measured with the following method, 20 grams of TVP was weighed in a beaker, 200 grams of distilled water at room temperature was added and the TVP stirred. The sample was stirred again at 10 and 20 minutes. After 30 minutes the water was removed using a sieve and the rehydrated TVP was let stand on the sieve for 5 minutes to have all the free water drain out. The hydrated TVP was then weighed and the water absorption capacity calculated as

$$\text{WAC (expressed in g water/ g TVP)} = (\text{hydrated weight} - 20) / 20$$

| Trial number | Density dry | WAC |
|---|---|---|
| Trial 1 | 127 | 2.295 |
| Trial 2 | 155 | 2.24 |

Sensory evaluation of rehydrated TVP

TVP samples were rehydrated using the same procedure used to measure water absorption capacity and evaluated for hardness. The three samples were made under the same extrusion screw profile and screw speed.

The samples were evaluated by three scientists using a free form format where the scientists tasted the samples. The samples had toasted notes and good texture.

**Claims**

1. A process for producing an oat protein composition comprising less than 100 ppm of organic solvents and a ratio of insoluble fiber/β-glucan of at least 5, preferably at least 7, at least 8, at least 9% at least 10, at least 11 or at least 12;

**characterized in that** the process comprises the following steps:

- preparing a suspension from oat processed material comprising between 10 and 35% of insoluble fibers, preferably an oat pulp fraction;
- separating a soluble fraction comprising protein from an insoluble fraction comprising fibers;
- forming a proteic precipitate;

wherein said process further comprises a step of adding polysorbate to the suspension from oat processed material and/or to the soluble fraction comprising protein; and wherein the insoluble fiber is measured determined using AOAC Official Method 2017.16; and the $\beta$-glucan is measured using AOAC Official Method 995.16.

2. A process according to claim 1, further comprising a step of homogenization after the addition of polysorbate.

3. A process according to any one of claims 1 or 2, wherein the polysorbate is added in an amount comprised between 0.1% and 10%, for example between 0.1% and 5%, preferably between 2% and 4%, and more preferably 3% by weight with respect to the total weight of dry solids of the suspension from oat processed material.

4. The process according to any one of claims 1 to 3, **characterized in that** the process comprises the following steps:

a. preparing a suspension from oat processed material comprising between 10 and 35% of insoluble fibers, preferably an oat pulp fraction;
b. a step of incubating the suspension, preferably at a pH between 1.5 and 3.0, preferably between 2.0 and 2.5 or at a pH comprised between 6.0 and 11.0, preferably 8.5-10.5;
c. separating a soluble fraction comprising protein from an insoluble fraction comprising fibers;
d. A step of adding a polysorbate to the soluble fraction and optionally adjusting pH from 5.8 to 8.0, preferably 6-7 to form additive-containing soluble fraction;
e. A step of heating the additive-containing soluble fraction at a temperature going from 35 to 100°C, for example from 35 to 80°C or 85-95°C;
e1. Optionally, a step of homogenizing the additive-containing soluble fraction;
f. A step of forming a proteic precipitate;
g. A step of separation of the proteic precipitate from soluble components to obtain a protein curd;
h. Optionally at least one washing step of the protein curd, preferably at a pH between 4.5 and 6 and at a temperature between 50 and 60°C;
i. Optionally a step of adjusting the pH of the protein curd at a range going from 6.5 to 10;
j. Optionally a step of heat treatment of the protein curd;
k. Optionally a step of homogenization treatment;
l. Optionally a step of drying including spray drying.

5. The process of claim 4 further comprising a step of adding an amylase enzyme to the protein-rich suspension of step a., to the incubated suspension of step b. or to the soluble fraction comprising proteins of step c. and reacting at a temperature at which the amylase catalyzes the hydrolysis of starch, for example comprised between 60 and 80°C, preferably between 65 and 75°C, even more preferably around 70°, thereby hydrolyzing the starch of the protein-rich suspension or of the soluble fraction comprising proteins.

6. The process of claim 5, wherein the amylase enzyme is added in an amount having an activity level comprised between 10 and 170 KNU/100g of oat processed material, preferably between 50 and 160 KNU/100g of oat processed material, even more preferably between 100 and 150 KNU/100g of oat processed material; wherein one KNU is the amount of alpha-amylase which, under standard conditions of pH 7.1 and 37°C, dextrinizes 5.26 g starch dry substance per hour.

7. The process of any one of the preceding claims, wherein the oat processed material comprises between 10-45% protein, 5-30% starch and starch hydrolysate, 10-50% fiber and 3 to 15% extractable lipids by weight based on the weight of the total dry solids of the oat processed material.

8. The process of any one of claims 4 to 7, wherein step g) for obtaining the protein curd is performed using centrifuge, plate frame filtration separation or membrane.

9. The process of any one of claims 4 to 8, wherein the process comprises at least one step of washing the protein curd.

10. The process according to any one of claims 1 to 3, **characterized in that** the process comprises the following steps:

   a. Preparing a suspension from oat processed material comprising between 10 and 35% of insoluble fibers, preferably an oat pulp fraction;
   b. A step of adding a polysorbate to the soluble fraction and optionally adjusting pH from 5.8 to 8.0, preferably 6-7 to form additive-containing suspension;
   c. Optionally, a step of homogenizing said additive-containing suspension;
   d. separating a soluble fraction comprising protein from an insoluble fraction comprising fibers;
   e. optionally, a step of forming a suspension from the insoluble fraction comprising fibers and separating again the soluble fraction comprising protein from an insoluble fraction comprising fibers and mixing the soluble fraction comprising protein with the soluble fraction obtained in step d)
   f. A step of forming a proteic precipitate;
   g. A step of separation of the proteic precipitate from soluble components to obtain a protein curd;
   h. Optionally at least one washing step of the protein curd, preferably at a pH between 4.5 and 6 and at a temperature between 50 and 60°C;
   i. Optionally a step of adjusting the pH of the protein curd at a range going from 6.5 to 10;
   j. Optionally a step of heat treatment of the protein curd;
   k. Optionally a step of homogenization treatment;
   l. Optionally a step of drying including spray drying.

11. The process of any one of the preceding claims wherein the step of forming a protein precipitate is done by adjusting the pH of the heated additive-containing soluble fraction in the range going from 4.5 to 5.8, preferably from 5.0 to 5.5.

12. The process of any one of the preceding claims wherein it comprises a drying step consisting in a spray drying step.

13. The process of any one of the preceding claims wherein the oat protein composition has an extractable lipid content below 10% by weight on dry matter based on the total dry weight of the oat protein composition.

14. An oat protein composition **characterized in that** it comprises, by weight on dry matter based on the total dry weight of the oat protein composition, at least 50% protein, less than 10% extractable lipids, less than 100 ppm of organic solvents, polysorbate and a ratio of insoluble fiber/$\beta$-glucan of at least 5, preferably at least 7, at least 8, at least 9% at least 10, at least 11 or at least 12; wherein the % extractable lipid is measured by Soxhlet method using petroleum ether using AOAC 963.15 protocol, the insoluble fiber is measured determined using AOAC Official Method 2017.16; and the $\beta$-glucan is measured using AOAC Official Method 995.16.

**Patentansprüche**

1. Verfahren zur Herstellung einer Haferproteinzusammensetzung, welche weniger als 100 ppm an organischen Lösungsmitteln und ein Verhältnis von unlöslichen Ballaststoffen / $\beta$-Glucan von wenigstens 5, vorzugsweise wenigstens 7, wenigstens 8, wenigstens 9% wenigstens 10, wenigstens 11 oder wenigstens 12 umfasst; **dadurch gekennzeichnet, dass** das Verfahren die folgenden Schritte umfasst:

   - Vorbereiten einer Suspension aus einem verarbeiteten Hafermaterial, welches zwischen 10 und 35 % an unlöslichen Ballaststoffen umfasst, vorzugsweise einer Haferpulpefraktion;
   - Separieren einer löslichen Fraktion, welche Protein umfasst, von einer unlöslichen Fraktion, welche Ballaststoffe umfasst;
   - Bilden eines Proteinpräzipitats;

   wobei das Verfahren ferner einen Schritt umfasst, eines Hinzufügens von Polysorbat zu der Suspension aus einem verarbeiteten Hafermaterial und/oder zu der löslichen Fraktion, welche Protein umfasst; und wobei die unlöslichen Ballaststoffe unter Verwendung der offiziellen AOAC-Methode 2017.16 bestimmt gemessen werden; und das $\beta$-Glucan unter Verwendung der offiziellen AOAC-Methode 995.16 gemessen wird.

2. Verfahren nach Anspruch 1, ferner umfassend einen Schritt eines Homogenisierens nach dem Hinzufügen von Polysorbat.

3. Verfahren nach einem der Ansprüche 1 oder 2, wobei das Polysorbat in einer Menge hinzugefügt wird, welche zwischen 0,1 Gew.-% und 10 Gew.-%, zum Beispiel zwischen 0,1 Gew.-% und 5 Gew.-%, vorzugsweise zwischen 2 Gew.-% und 4 Gew.-% umfasst ist und noch bevorzugter 3 Gew.-% ist, in Bezug auf das Gesamtgewicht der Trockensubstanz der Suspension aus verarbeitetem Hafermaterial.

4. Verfahren nach einem der Ansprüche 1 bis 3, **dadurch gekennzeichnet, dass** das Verfahren die folgenden Schritte umfasst:

> a. Vorbereiten einer Suspension aus einem verarbeiteten Hafermaterial, welches zwischen 10 und 35 % an unlöslichen Ballaststoffen umfasst, vorzugsweise einer Haferpulpefraktion;
> b. einen Schritt eines Inkubierens der Suspension, vorzugsweise bei einem pH-Wert zwischen 1,5 und 3,0, vorzugsweise zwischen 2,0 und 2,5, oder bei einem pH-Wert, welcher zwischen 6,0 und 11,0 umfasst ist, vorzugsweise 8,5 - 10,5;
> c. Separieren einer löslichen Fraktion, welche Protein umfasst, von einer unlöslichen Fraktion, welche Ballaststoffe umfasst;
> d. einen Schritt eines Hinzufügens eines Polysorbats zu der löslichen Fraktion und optional eines Einstellens des pH-Werts auf 5,8 bis 8,0, vorzugsweise 6 - 7, um eine additivhaltige lösliche Fraktion zu bilden;
> e. einen Schritt eines Erwärmens der additivhaltigen löslichen Fraktion auf eine Temperatur, welche von 35 bis 100 °C reicht, zum Beispiel von 35 bis 80 °C oder 85 - 95 °C;
> e1. optional einen Schritt eines Homogenisierens der additivhaltigen löslichen Fraktion;
> f. einen Schritt eines Bildens eines Proteinpräzipitats;
> g. einen Schritt einer Separation des Proteinpräzipitats von löslichen Komponenten, um einen Proteinquark zu erhalten;
> h. optional wenigstens einen Waschschritt des Proteinquarks, vorzugsweise bei einem pH-Wert zwischen 4,5 und 6 und bei einer Temperatur zwischen 50 und 60 °C;
> i. optional einen Schritt eines Einstellens des pH-Werts des Proteinquarks auf einen Bereich, welcher von 6,5 bis 10 reicht;
> j. optional einen Schritt einer Wärmebehandlung des Proteinquarks;
> k. optional einen Schritt einer Homogenisierungsbehandlung;
> l. optional einen Schritt eines Trocknens, umfassend ein Sprühtrocknen.

5. Verfahren nach Anspruch 4, ferner umfassend einen Schritt eines Hinzufügens eines Amylaseenzyms zu der proteinreichen Suspension aus Schritt a., zu der inkubierten Suspension aus Schritt b. oder zu der löslichen Fraktion, welche Proteine umfasst, aus Schritt c., und eines Reagierens bei einer Temperatur, bei welcher die Amylase die Hydrolyse von Stärke katalysiert, zum Beispiel zwischen 60 und 80 °C, vorzugsweise zwischen 65 und 75 °C, umfasst, noch bevorzugter bei etwa 70 °C, wodurch die Stärke der proteinreichen Suspension oder der löslichen Fraktion, welche Proteine umfasst, hydrolysiert wird.

6. Verfahren nach Anspruch 5, wobei das Amylaseenzym in einer Menge hinzugefügt wird, welche ein Aktivitätsniveau aufweist, welches zwischen 10 und 170 KNU/100g verarbeitetem Hafermaterial, vorzugsweise zwischen 50 und 160 KNU/100g verarbeitetem Hafermaterial, noch bevorzugter zwischen 100 und 150 KNU/100g verarbeitetem Hafermaterial, umfasst ist; wobei ein KNU die Menge von Alpha-Amylase ist, welche, unter Standardbedingungen eines pH-Werts von 7,1 und bei 37 °C, 5,26 g Stärke-Trockensubstanz pro Stunde dextriniert.

7. Verfahren nach einem der vorhergehenden Ansprüche, wobei das verarbeitete Hafermaterial zwischen 10 und 45 Gew.-% Protein, 5 bis 30 Gew.-% Stärke und Stärkehydrolysat, 10 bis 50 Gew.-% Ballaststoffe und 3 bis 15 Gew.-% extrahierbare Lipide umfasst, auf Grundlage des Gewichts der gesamten Trockensubstanz des verarbeiteten Hafermaterials.

8. Verfahren nach einem der Ansprüche 4 bis 7, wobei Schritt g) zum Erhalten des Proteinquarks unter Verwendung einer Zentrifuge, einer Plattenrahmenfiltrationsseparation oder einer Membran durchgeführt wird.

9. Verfahren nach einem der Ansprüche 4 bis 8, wobei das Verfahren wenigstens einen Schritt eines Waschens des Proteinquarks umfasst.

10. Verfahren nach einem der Ansprüche 1 bis 3, **dadurch gekennzeichnet, dass** das Verfahren die folgenden Schritte umfasst:

> a. Vorbereiten einer Suspension aus einem verarbeiteten Hafermaterial, welches zwischen 10 und 35 % an unlöslichen Ballaststoffen umfasst, vorzugsweise einer Haferpulpefraktion;

b. einen Schritt eines Hinzufügens eines Polysorbats zu der löslichen Fraktion und optional eines Einstellens des pH-Werts auf 5,8 bis 8,0, vorzugsweise 6 - 7, um eine additivhaltige Suspension zu bilden;

c. optional einen Schritt eines Homogenisierens der additivhaltigen Suspension;

d. Separieren einer löslichen Fraktion, welche Protein umfasst, von einer unlöslichen Fraktion, welche Ballaststoffe umfasst;

e. optional einen Schritt eines Bildens einer Suspension aus der unlöslichen Fraktion, welche Ballaststoffe umfasst, und eines erneuten Separierens der löslichen Fraktion, welche Protein umfasst, von einer unlöslichen Fraktion, welche Ballaststoffe umfasst, und eines Mischens der löslichen Fraktion, welche Protein umfasst, mit der in Schritt d) erhaltenen löslichen Fraktion

f. einen Schritt eines Bildens eines Proteinpräzipitats;

g. einen Schritt einer Separation des Proteinpräzipitats von löslichen Komponenten, um einen Proteinquark zu erhalten;

h. optional wenigstens einen Waschschritt des Proteinquarks, vorzugsweise bei einem pH-Wert zwischen 4,5 und 6 und bei einer Temperatur zwischen 50 und 60 °C;

i. optional einen Schritt eines Einstellens des pH-Werts des Proteinquarks auf einen Bereich, welcher von 6,5 bis 10 reicht;

j. optional einen Schritt einer Wärmebehandlung des Proteinquarks;

k. optional einen Schritt einer Homogenisierungsbehandlung;

l. optional einen Schritt eines Trocknens, umfassend ein Sprühtrocknen.

11. Verfahren nach einem der vorhergehenden Ansprüche, wobei der Schritt des Bildens eines Proteinpräzipitats durch ein Einstellen des pH-Werts der erwärmten additivhaltigen löslichen Fraktion auf den Bereich erfolgt, welcher von 4,5 bis 5,8, vorzugsweise von 5,0 bis 5,5, reicht.

12. Verfahren nach einem der vorhergehenden Ansprüche, wobei es einen Trocknungsschritt umfasst, welcher aus einem Sprühtrocknungsschritt besteht.

13. Verfahren nach einem der vorhergehenden Ansprüche, wobei die Haferproteinzusammensetzung einen extrahierbaren Lipidgehalt unterhalb 10 Gew.-% der Trockenmasse aufweist, auf Grundlage auf das Gesamttrockengewichts der Haferproteinzusammensetzung.

14. Haferproteinzusammensetzung, **dadurch gekennzeichnet, dass** sie, bezogen auf das Gewicht der Trockenmasse auf Grundlage des Gesamttrockengewichts der Haferproteinzusammensetzung, wenigstens 50 % Protein, weniger als 10 % extrahierbare Lipide, weniger als 100 ppm an anorganischen Lösungsmitteln, Polysorbat und ein Verhältnis von unlöslichen Ballaststoffen / $\beta$-Glucan von wenigstens 5, vorzugsweise wenigstens 7, wenigstens 8, wenigstens 9% wenigstens 10, wenigstens 11 oder wenigstens 12 umfasst; wobei der %-Anteil der extrahierbaren Lipide nach der Soxhlet-Methode unter Verwendung von Petrolether unter Verwendung des Protokolls AOAC 963.15 gemessen werden, die unlöslichen Ballaststoffe unter Verwendung der offiziellen AOAC-Methode 2017.16 bestimmt gemessen werden; und das $\beta$-Glucan unter Verwendung der offiziellen AOAC-Methode 995.16 gemessen wird.

## Revendications

1. Procédé de production d'une composition de protéines d'avoine comprenant moins de 100 ppm de solvants organiques et un rapport fibres insolubles/$\beta$-glucane d'au moins 5, de préférence d'au moins 7, d'au moins 8, d'au moins 9, d'au moins 10, d'au moins 11 ou d'au moins 12 ; **caractérisé en ce que** le procédé comprend les étapes suivantes :

- la préparation d'une suspension issue de matière transformée d'avoine comprenant entre 10 et 35 % de fibres insolubles, de préférence une fraction de pulpe d'avoine ;
- la séparation d'une fraction soluble comprenant des protéines d'une fraction insoluble comprenant des fibres ;
- la formation d'un précipité protéique ;

dans lequel ledit procédé comprend en outre une étape d'ajout de polysorbate à la suspension issue de matière transformée d'avoine et/ou à la fraction soluble comprenant des protéines ; et dans lequel la fibre insoluble est mesurée et déterminée selon la méthode 2017.16 approuvée par l'AOAC ; et le $\beta$-glucane est mesuré selon la méthode 995.16 approuvée par l'AOAC.

**2.** Procédé selon la revendication 1, comprenant en outre une étape d'homogénéisation après l'ajout de polysorbate.

**3.** Procédé selon l'une quelconque des revendications 1 ou 2, dans lequel le polysorbate est ajouté en une quantité comprise entre 0,1 % et 10 %, par exemple entre 0,1 % et 5 %, de préférence entre 2 % et 4 %, et mieux encore de 3 % en poids rapportés au poids total de matières sèches de la suspension issue de matière transformée d'avoine.

**4.** Procédé selon l'une quelconque des revendications 1 à 3, **caractérisé en ce que** le procédé comprend les étapes suivantes :

   a. la préparation d'une suspension à partir de matière transformée d'avoine comprenant entre 10 et 35 % de fibres insolubles, de préférence une fraction de pulpe d'avoine ;
   b. une étape d'incubation de la suspension, de préférence à un pH entre 1,5 et 3,0, de préférence entre 2,0 et 2,5, ou à un pH compris entre 6,0 et 11,0, de préférence de 8,5 à 10,5 ;
   c. la séparation d'une fraction soluble comprenant des protéines d'une fraction insoluble comprenant des fibres ;
   d. une étape consistant à ajouter un polysorbate à la fraction soluble et éventuellement à ajuster le pH de 5,8 à 8,0, de préférence à 6-7, afin de former une fraction soluble contenant un additif ;
   e. une étape de chauffage de la fraction soluble contenant un additif à une température allant de 35 à 100 °C, par exemple de 35 à 80 °C ou de 85 à 95 °C ;
   e1. éventuellement, une étape d'homogénéisation de la fraction soluble contenant un additif ;
   f. une étape de formation d'un précipité protéique ;
   g. une étape de séparation du précipité protéique des composants solubles pour obtenir un caillé protéique ;
   h. éventuellement au moins une étape de lavage du caillé protéique, de préférence à un pH entre 4,5 et 6 et à une température entre 50 et 60 °C ;
   i. éventuellement une étape d'ajustement du pH du caillé protéique dans une plage allant de 6,5 à 10 ;
   j. éventuellement une étape de traitement thermique du caillé protéique ;
   k. éventuellement une étape de traitement d'homogénéisation ;
   l. éventuellement une étape de séchage incluant le séchage par pulvérisation.

**5.** Procédé selon la revendication 4, comprenant en outre une étape d'ajout d'une enzyme amylase à la suspension riche en protéines de l'étape a., à la suspension incubée de l'étape b. ou à la fraction soluble comprenant des protéines de l'étape c., et la réaction à une température à laquelle l'amylase catalyse l'hydrolyse de l'amidon, par exemple comprise entre 60 et 80 °C, de préférence entre 65 et 75 °C, mieux encore autour de 70 °C, hydrolysant ainsi l'amidon de la suspension riche en protéines ou de la fraction soluble comprenant des protéines.

**6.** Procédé selon la revendication 5, dans lequel l'enzyme amylase est ajoutée en une quantité ayant un niveau d'activité compris entre 10 et 170 KNU/100 g de matière transformée d'avoine, de préférence entre 50 et 160 KNU/100 g de matière transformée d'avoine, mieux encore entre 100 et 150 KNU/100 g de matière transformée d'avoine ; dans lequel une KNU est la quantité d'alpha-amylase qui, dans des conditions standard de pH 7,1 et 37 °C, dextrinise 5,26 g de substance sèche d'amidon par heure.

**7.** Procédé selon l'une quelconque des revendications précédentes, dans lequel la matière transformée d'avoine comprend entre 10 et 45 % de protéines, 5 à 30 % d'amidon et d'hydrolysat d'amidon, 10 à 50 % de fibres et 3 à 15 % de lipides extractibles en poids rapportés au poids des matières sèches totales de la matière transformée d'avoine.

**8.** Procédé selon l'une quelconque des revendications 4 à 7, dans lequel l'étape g) d'obtention du caillé protéique est réalisée par séparation par filtration centrifuge, à cadre de plaque ou par membrane.

**9.** Procédé selon l'une quelconque des revendications 4 à 8, dans lequel le procédé comprend au moins une étape de lavage du caillé protéique.

**10.** Procédé selon l'une quelconque des revendications 1 à 3, **caractérisé en ce que** le procédé comprend les étapes suivantes :

   a. la préparation d'une suspension à partir de matière transformée d'avoine comprenant entre 10 et 35 % de fibres insolubles, de préférence une fraction de pulpe d'avoine ;
   b. une étape consistant à ajouter un polysorbate à la fraction soluble et éventuellement à ajuster le pH de 5,8 à 8,0, de préférence à 6-7, afin de former une suspension contenant un additif ;
   c. éventuellement, une étape d'homogénéisation de ladite suspension contenant un additif ;

d. la séparation d'une fraction soluble comprenant des protéines d'une fraction insoluble comprenant des fibres ;

e. éventuellement une étape de formation d'une suspension à partir de la fraction insoluble comprenant des fibres et de séparation à nouveau de la fraction soluble comprenant des protéines d'une fraction insoluble comprenant des fibres, et de mélange de la fraction soluble comprenant des protéines avec la fraction soluble obtenue à l'étape d)

f. une étape de formation d'un précipité protéique ;

g. une étape de séparation du précipité protéique des composants solubles pour obtenir un caillé protéique ;

h. éventuellement au moins une étape de lavage du caillé protéique, de préférence à un pH entre 4,5 et 6 et à une température entre 50 et 60 °C ;

i. éventuellement une étape d'ajustement du pH du caillé dans une plage allant de 6,5 à 10 ;

j. éventuellement une étape de traitement thermique du caillé protéique ;

k. éventuellement une étape de traitement d'homogénéisation ;

l. éventuellement une étape de séchage incluant le séchage par pulvérisation.

11. Procédé selon l'une quelconque des revendications précédentes, dans lequel l'étape de formation d'un précipité protéique est réalisée en ajustant le pH de la fraction soluble contenant un additif chauffée dans la plage allant de 4,5 à 5,8, de préférence de 5,0 à 5,5.

12. Procédé selon l'une quelconque des revendications précédentes, dans lequel le procédé comprend une étape de séchage consistant en une étape de séchage par pulvérisation.

13. Procédé selon l'une quelconque des revendications précédentes, dans lequel la composition de protéines d'avoine présente une teneur en lipides extractibles inférieure à 10 % en poids sur matière sèche rapporté au poids sec total de la composition de protéines d'avoine.

14. Composition de protéines d'avoine, **caractérisée en ce qu'**elle comprend, en poids sur matière sèche rapporté au poids sec total de la composition de protéines d'avoine, au moins 50 % de protéines, moins de 10 % de lipides extractibles, moins de 100 ppm de solvants organiques, de polysorbate et un rapport fibres insolubles/$\beta$-glucane d'au moins 5, de préférence d'au moins 7, d'au moins 8, d'au moins 9, d'au moins 10, d'au moins 11 ou d'au moins 12 ; dans laquelle le pourcentage de lipides extractibles est mesuré par la méthode de Soxhlet utilisant de l'éther de pétrole selon le protocole 963.15 approuvé par l'AOAC, la fibre insoluble est mesurée et déterminée selon la méthode 2017.16 approuvée par l'AOAC ; et le $\beta$-glucane est mesuré selon la méthode 995.16 approuvée par l'AOAC.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0051943 A
- EP 1706001 A
- EP 2120604 A
- EP 2020068658 W
- WO 2021001478 A
- WO 2011078711 A1

**Non-patent literature cited in the description**

- **BRÜCKNER-GÜHMANN et al.** Foaming characteristics of oat protein and modification by partial hydrolysis. *European Food Research and Technology*, 28 August 2018, vol. 244 (12), 2095-2106
- **HOOVER R.** Composition, structure, functionality and chemical modification of legume starches: a review. *Can. J. Physiol. Pharmacol.*, 1991, vol. 69, 79-92